(19)

Europäisches Patentamt

European Patent Office

Office européen des brevets

(11) **EP 3 293 002 A1**

(12) **EUROPEAN PATENT APPLICATION**

(43) Date of publication:
**14.03.2018 Bulletin 2018/11**

(21) Application number: **16382417.0**

(22) Date of filing: **09.09.2016**

(51) Int Cl.:
**B32B 27/08** (2006.01)   **B32B 27/32** (2006.01)
**B32B 27/34** (2006.01)   **B32B 27/36** (2006.01)
**B32B 27/12** (2006.01)   **B32B 5/02** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Dow Global Technologies LLC**
**Midland, MI 48674 (US)**

(72) Inventors:
• **Parkinson, Shaun**
  **43006 Tarragona (ES)**
• **Chirinos, Carolina**
  **43006 Tarragona (ES)**

(74) Representative: **Elzaburu S.L.P.**
**C/ Miguel Angel, 21**
**28010 Madrid (ES)**

(54) **MULTILAYER FILMS AND LAMINATES AND PACKAGES FORMED FROM SAME**

(57)    The present invention provides multilayer films, laminates, and packages. In one aspect, a multilayer film comprises Layer A which is a sealant layer, Layer B having a top facial surface and a bottom facial surface and having a Shore Hardness D of 50 or less and a crystallinity of 44% or less, and Layer C having a top facial surface and a bottom facial surface and comprising polyethylene, wherein the top facial surface of Layer B is in adhering contact with the bottom facial surface of Layer A and wherein the top facial surface of Layer C is in adhering contact with the bottom facial surface of Layer B.

**EP 3 293 002 A1**

## Description

### Field

The present invention relates to multilayer films that can be used in laminates and packages. Such multilayer films can be particularly useful in food packages.

### Introduction

Heat sealable films are employed on a large scale for temporarily closing containers that include, for example, food products or medical devices. To gain consumer acceptance, a number of characteristics associated with a heat sealable film are desired. For example, the film should provide a leak-proof closure of the container or bag. To seal a bag, heat sealing is commonly used. Various apparatus have been constructed for the purpose of forming bags while simultaneously filling the bags with the desired contents. These apparatus are commonly known as vertical form-fill-and-seal and horizontal form-fill-and-seal machines.

These machines typically have forming collars or bars that shape a flat piece of film into a tubular shape of a bag. Hot metal sealing jaws are moved from an open position to a closed position, contacting the film in order to seal it into a bag shape. During the sealing process, the outer layer of the film comes into direct contact with the hot metal surface of the sealing jaws. Heat is thus transferred through the outer layer of the film to melt and fuse the inner sealant layer to form a seal. Generally, the outer layer has a higher melting temperature than the inner sealant layer. As such, while the inner sealant layer is melted to form a seal, the outer layer of the film does not melt and is not stuck to the sealing jaws. After the sealing jaws reopen, the film is cooled to room temperature.

Before the inner sealant layer is cooled to room temperature, it should be able to maintain its seal integrity. The ability of an adhesive or sealant layer to resist creep of the seal while it is still in a warm or molten state is generally referred to as hot tack. To form a good seal, the hot tack of the sealable film should be adequate.

Besides adequate hot tack, it is also desirable to have a low heat seal initiation temperature which helps to ensure fast packaging line speeds and a broad sealing window which can accommodate variability in process conditions, such as pressure and temperature. A broad sealing window also enables high speed packaging of heat sensitive products, as well as provides a degree of forgiveness for changes in packaging or filling speeds.

In addition to the sealable characteristic of a sealable film, another desirable characteristic is a low coefficient of friction. A low coefficient of friction ensures that the sealant layer can be processed smoothly and efficiently on fabrication and packaging equipment and is particularly important for vertical form-fill-and-seal packaging.

It would be desirable to provide a multilayer film with good sealing characteristics that also provides hermeticity when incorporated into a package.

### Summary

In some aspects, the present disclosure provides multilayer films that advantageously have good sealing properties and that can be recycled. In some aspects, the present disclosure provides multilayer films that can be incorporated into laminates and/or packages with enhanced recyclability and with improved sealing performance in terms of line speed and hermeticity.

In one embodiment, the present invention provides a multilayer film that comprises Layer A which is a sealant layer, Layer B having a top facial surface and a bottom facial surface and having a Shore Hardness D of 50 or less and a crystallinity of 44% or less, and Layer C having a top facial surface and a bottom facial surface and comprising polyethylene, wherein the top facial surface of Layer B is in adhering contact with the bottom facial surface of Layer A and wherein the top facial surface of Layer C is in adhering contact with the bottom facial surface of Layer B.

In another embodiment, the present invention provides a laminate that comprises a first film comprising polyethylene terephthalate, polypropylene, polyamide, or polyethylene, and a multilayer film according to any of the embodiments disclosed herein, wherein the first film is laminated to the multilayer film.

In another embodiment, the present invention provides packages (e.g., flexible packages, pouches, stand-up pouches, etc.) formed from any of the multilayer films disclosed herein. In another embodiment, the present invention provides packages comprising a nonwoven layer and a multilayer film according to any of the embodiments disclosed herein.

These and other embodiments are described in more detail in the Detailed Description.

### Brief Description of Figures

Figure 1 is a plot showing hermeticity data for some embodiments of inventive films discussed in the Examples section.
Figure 2 is a plot showing hermeticity data for some embodiments of inventive films discussed in the Examples section.

**Detailed Description**

Unless specified otherwise herein, percentages are weight percentages (wt%) and temperatures are in °C.

The term "composition," as used herein, includes material(s) which comprise the composition, as well as reaction products and decomposition products formed from the materials of the composition.

The term "comprising," and derivatives thereof, is not intended to exclude the presence of any additional component, step or procedure, whether or not the same is disclosed herein. In order to avoid any doubt, all compositions claimed herein through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities may be incorporated into and/or within the polymer. A polymer may be a single polymer, a polymer blend or polymer mixture.

The term "interpolymer," as used herein, refers to a polymer prepared by the polymerization of at least two different types of monomers. The generic term interpolymer thus includes copolymers (employed to refer to polymers prepared from two different types of monomers), and polymers prepared from more than two different types of monomers.

The terms "olefin-based polymer" or "polyolefin", as used herein, refer to a polymer that comprises, in polymerized form, a majority amount of olefin monomer, for example ethylene or propylene (based on the weight of the polymer), and optionally may comprise one or more comonomers.

The term, "ethylene/$\alpha$-olefin interpolymer," as used herein, refers to an interpolymer that comprises, in polymerized form, a majority amount of ethylene monomer (based on the weight of the interpolymer), and an $\alpha$-olefin.

The term, "ethylene/$\alpha$-olefin copolymer," as used herein, refers to a copolymer that comprises, in polymerized form, a majority amount of ethylene monomer (based on the weight of the copolymer), and an $\alpha$-olefin, as the only two monomer types.

"Blend", "polymer blend" and like terms mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art. Blends are not laminates, but one or more layers of a laminate may contain a blend.

The term "in adhering contact" and like terms mean that one facial surface of one layer and one facial surface of another layer are in touching and binding contact to one another such that one layer cannot be removed for the other layer without damage to the in-contact facial surfaces of both layers.

"Polypropylene" means polymers having greater than 50 wt% units derived from propylene monomer.

"Polyethylene" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single site catalyzed Linear Low Density Polyethylene, including both linear and substantially linear low density resins (m-LLDPE); Medium Density Polyethylene (MDPE); and High Density Polyethylene (HDPE). These polyethylene materials are generally known in the art; however the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example US 4,599,392, which is hereby incorporated by reference). LDPE resins typically have a density in the range of 0.916 to 0.940 g/cm$^3$.

The term "LLDPE", includes resins made using the traditional Ziegler-Natta catalyst systems as well as single-site catalysts such as bis-metallocenes (sometimes referred to as "m-LLDPE"), post-metallocene catalysts, and constrained geometry catalysts, and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No.

3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art, with gas and slurry phase reactors being most preferred.

The term "MDPE" refers to polyethylenes having densities from 0.926 to 0.940 g/cm$^3$. "MDPE" is typically made using chromium or Ziegler-Natta catalysts or using metallocene, constrained geometry, or single site catalysts, and typically have a molecular weight distribution ("MWD") greater than 2.5.

The term "HDPE" refers to polyethylenes having densities greater than about 0.940 g/cm$^3$, which are generally prepared with Ziegler-Natta catalysts, chrome catalysts or even metallocene catalysts.

"Units derived from ethylene," "ethylene content," and like terms mean the units of a polymer that formed from the polymerization of ethylene monomers. "Units derived from $\alpha$-olefin," "alpha-olefin content," "$\alpha$-olefin content," and like terms mean the units of a polymer that formed from the polymerization of specific $\alpha$-olefin monomers, in particular at least one of a $C_{3-10}$ $\alpha$ olefin. "Units derived from propylene," "propylene content," and like terms mean the units of a polymer that formed from the polymerization of propylene monomers.

"Propylene based polymer," and like terms mean a polymer that comprises a majority weight percent polymerized propylene monomer, also referred to as units derived from propylene (based on the total amount of polymerizable monomers), and optionally comprises at least one polymerized comonomer different from propylene (such as at least one selected from a $C_2$ and $C_{4-10}$ $\alpha$ olefin) so as to form a propylene-based interpolymer. For example, when the propylene-based polymer is a copolymer, the propylene content is greater than 50 wt%, based on the total weight of the copolymer.

"Ethylene based polymer" and like terms mean a polymer that comprises a majority weight percent polymerized ethylene monomer, also referred to as units derived from ethylene (based on the total weight of polymerizable monomers), and optionally may comprise at least one polymerized comonomer different from ethylene (such as at least one selected from a $C_{3-10}$ $\alpha$ olefin) so as to form an ethylene-based interpolymer. For example, when the ethylene-based polymer is a copolymer, the amount of ethylene is greater than 50 wt%, based on the total weight to the copolymer.

The term "polypropylene" includes homopolymers of propylene such as isotactic polypropylene, syndiotactic polypropylene, and copolymers of propylene and one or more $C_{2, 4-8}$ $\alpha$-olefins in which propylene comprises at least 50 mole percent. Preferably, a plurality of the polymerized monomer units of at least one block or segment in the polymer (a crystalline block) comprise propylene, preferably at least 90 mole percent, more preferably at least 93 mole percent, and most preferably at least 95 mole percent. A polymer made primarily from a different $\alpha$-olefin, such as 4-methyl-1-pentene would be named similarly.

The term "crystalline" refers to a polymer or polymer block that possesses a first order transition or crystalline melting point ($T_m$) as determined by differential scanning calorimetry (DSC) or equivalent technique. The term may be used interchangeably with the term "semicrystalline".

The term "crystallizable" refers to a monomer that can polymerize such that the resulting polymer is crystalline. Crystalline ethylene polymers typically have, but are not limited to, densities of 0.89 g/cc to 0.97 g/cc and melting points of 75°C to 140°C. Crystalline propylene polymers may have, but are not limited to, densities of 0.88 g/cc to 0.91 g/cc and melting points of 100 °C to 170°C.

The term "amorphous" refers to a polymer lacking a crystalline melting point as determined by differential scanning calorimetry (DSC) or equivalent technique.

The term "isotactic" is defined as polymer repeat units having at least 70 percent isotactic pentads as determined by 13C-NMR analysis. "Highly isotactic" is defined as polymers having at least 90 percent isotactic pentads.

The term "block copolymer" or "segmented copolymer" refers to a polymer comprising two or more chemically distinct regions or segments (referred to as "blocks") joined in a linear manner, that is, a polymer comprising chemically differentiated units that are joined (covalently bonded) end-to-end with respect to polymerized functionality (e.g., polymerized propylenic functionality), rather than in pendent or grafted fashion. Block copolymers comprise sequences ("blocks") of the same monomer unit, covalently bound to sequences of unlike type. The blocks can be connected in a variety of ways, such as A-B in diblock and A-B-A triblock structures, where A represents one block and B represents a different block. In a multi-block copolymer, A and B can be connected in a number of different ways and be repeated multiply. It may further comprise additional blocks of different type. Multi-block copolymers may be linear multi-block, multi block star polymers (in which all blocks bond to the same atom or chemical moiety) or comb-like polymers where the B blocks are attached at one end to an A backbone. The block copolymers can be linear or branched. With respect to the block copolymers, the blocks may differ in the amount of comonomer incorporated therein. The blocks may also differ in the type of comonomer, density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The block copolymers are characterized by unique distributions of polymer polydispersity (PDI or $M_w/M_n$), block length distribution, and/or block number distribution, e.g., due to the effect of the shuttling agent(s) in combination with the catalyst(s).

The term "block composite" (BC) refers to polymers comprising a soft copolymer, a hard copolymer, and a block copolymer having a soft block (i.e., soft segment) and a hard block (i.e., hard segment), wherein the hard block of the block copolymer is the same composition as the hard copolymer of the block composite and the soft block of the block copolymer is the same composition as the soft copolymer of the block composite. The compositional split between the amount of soft copolymer and hard copolymer will be essentially the same as that between the corresponding blocks in the block copolymer. The block copolymers can be linear or branched.

"Hard" blocks/segments refer to highly crystalline blocks of polymerized units in which a monomer (e.g., propylene) is present in an amount greater than 90 mole percent. In other words, the comonomer content (e.g., ethylene content) in the hard blocks/segments is less than 10 mole percent. In some embodiments, the hard segments comprise all or substantially all propylene units (such as an iPP - isotactic polypropylene - copolymer or homopolymer block). "Soft" blocks/segments, on the other hand, refer to amorphous, substantially amorphous, or elastomeric blocks of polymerized units in which a monomer (e.g., ethylene) is present in an amount from 10 mole percent to 90 mole percent.

In one embodiment, the present invention provides a multilayer film that comprises Layer A which is a sealant layer, Layer B having a top facial surface and a bottom facial surface and having a Shore Hardness D of 50 or less and a crystallinity of 44% or less, and Layer C having a top facial surface and a bottom facial surface and comprising polyethylene, wherein the top facial surface of Layer B is in adhering contact with the bottom facial surface of Layer A and wherein the top facial surface of Layer C is in adhering contact with the bottom facial surface of Layer B. Layer B is not a tie layer in some embodiments. In some embodiments, Layer A is an outer layer of the multilayer film.

In some embodiments, Layer B comprises at least 15 weight percent of a polyolefin based on the total weight of Layer B, wherein the polyolefin has a Shore Hardness D of less than 35 and a crystallinity of 20% or less. In some such embodiments, Layer B comprises at least 50% of the polyolefin by weight. In some such embodiments, Layer B comprises at least 70% of the polyolefin by weight. In some embodiments, Layer B comprises 100% of the polyolefin by weight. In some embodiments, the polyolefin comprises an elastomeric propylene-based polymer. The polyolefin, in some embodiments, comprises an olefin block copolymer. In some embodiments, the polyolefin comprises a polyolefin plastomer. The polyolefin, in some embodiments, comprises a block composite comprising (i) an ethylene-propylene copolymer, (ii) an isotactic polypropylene copolymer, and (iii) a block copolymer including an ethylene-propylene soft block that has a same composition as the ethylene-propylene copolymer of the block composite and an isotactic polypropylene hard block that has a same composition as the isotactic polypropylene copolymer of the block composite.

Layer B, in some embodiments, has a thickness of at least 10 microns.

In some embodiments, Layer A is formed from one or more ethylene-based polymers. In some embodiments, Layer A has a Shore Hardness D of 50 or more and a crystallinity of 47% or more. In some such embodiments, Layer A comprises linear low density polyethylene and low density polyethylene. Layer A, in some embodiments, has a Shore Hardness D of more than 45 and a crystallinity of 39% or more. In some such embodiments, Layer A comprises polyolefin plastomer and low density polyethylene.

Layer C, in some embodiments, has a Shore Hardness D of 50 or more and a crystallinity of 47% or more.

In some embodiments, the multilayer film comprises 5 layers. For example, in some embodiments, the multilayer film further comprises Layer D and Layer E, wherein a top facial surface of Layer D is in adhering contact with the bottom facial surface of Layer C, wherein a top facial surface of Layer E is in adhering contact with a bottom facial surface of Layer D.

The multilayer film, in some embodiments, comprises 7 layers.

Some embodiments of the present invention relate to laminates. In one embodiment, a laminate of the present invention comprises a first film comprising polyethylene terephthalate, polypropylene, polyamide, or polyethylene, and a multilayer film according to any of the embodiments disclosed herein, wherein the first film is laminated to the multilayer film.

Some embodiments of the present invention relate to packages. In one embodiment, a package of the present invention is formed from a multilayer film according to any of the embodiments disclosed herein. In another embodiment, a package of the present invention comprises a nonwoven layer and a multilayer film according to any of the embodiments disclosed herein, wherein the nonwoven layer forms an outer layer of the package.

Sealant Layer

Multilayer films of the present invention comprise a first layer (Layer A) which is a sealant layer. In some embodiments, the sealant layer (Layer A) is an outer layer of the multilayer film. In some embodiments, the sealant layer (Layer A) is formed from one or more ethylene-based polymers. The use of one or more ethylene-based polymers can facilitate recycling of the multilayer films and articles formed from such films.

In general, any sealant layer known to those of skill in the art can be used in embodiments of the present invention.

In some embodiments, the sealant layer has a Shore Hardness D of 50 or more and a crystallinity of 47% or more. In some such embodiments, such sealant layers can include linear low density polyethylene and blends of linear low density polyethylenes with low density polyethylenes (e.g., 80% LLDPE, 20% LDPE). Non-limiting examples of such sealant layers include, for example, 80% DOWLEX™ NG 5056.01G (LLDPE) blended with 20% DOW™ LDPE 312E, and 80% DOWLEX™ 2045 (LLDPE) blended with 20% DOW™ LDPE 312E, each of which are commercially available from The Dow Chemical Company.

In some embodiments, the sealant layer has a Shore Hardness D of more than 45 and a crystallinity of 39% or more. In some such embodiments, the sealant layer comprises polyolefin plastomer or blends of polyolefin plastomers and low density polyethylenes. Non-limiting examples of such sealant layers include, for example, AFFINITY™ PF1146G (polyolefin plastomer) blended with 20% DOW™ LDPE 312E, and 80% AFFINITY™ PL1881G (polyolefin plastomer) blended with 20% DOW™ LDPE 312E, each of which are commercially available from The Dow Chemical Company.

In some embodiments, a layer opposite the sealant layer (e.g., the outermost layer on the opposite side of the film from the sealant layer) can be corona treated using techniques known to those of skill in the art prior to sealing the multilayer film.

Layer B

Multilayer films of the present invention include a second layer (Layer B) having a top facial surface and a bottom facial surface, wherein the top facial surface of Layer B is in adhering contact with a bottom facial surface of the sealant layer (Layer A).

In some embodiments, Layer B is not a tie layer. That is, in such embodiments, Layer B has a thickness such that it provides structural support for the multilayer film. In some embodiments of the present invention, Layer B has a thickness of at least 10 microns. Layer B, in some embodiments, has a thickness of at least 20 microns. Layer B, in some embodiments, has a thickness of at least 25 microns. In some embodiments, Layer B has a thickness of up to 70 microns. Layer B, in some embodiments, has a thickness of up to 50 microns.

Layer B has a Shore Hardness D of 50 or less and a crystallinity of 44% or less in some embodiments. In some embodiments, Layer B has a Shore Hardness D of 48 or less and a crystallinity of 43% or less. Layer B has a Shore Hardness D of 46 or less and a crystallinity of 41% or less in some embodiments. Providing a layer having such Shore Hardness D and crystallinity values adjacent to a sealant layer has been found by the inventors to unexpectedly provide an improvement in actual sealing performance (e.g., with regard to line speed and hermeticity) when multilayer films incorporating such a sealant layer and an adjacent layer (Layer B) are incorporated into laminates (e.g., with a polypropylene film) and then formed into a package.

In some embodiments, Layer B comprises at least 15 weight percent of a polyolefin based on the total weight of Layer B, wherein the polyolefin has a Shore Hardness D of less than 35 and a crystallinity of 20% or less. In some such embodiments, Layer B comprises at least 50 weight percent of the polyolefin having a Shore Hardness D of less than 35 and a crystallinity of 20% or less. In some such embodiments, Layer B comprises at least 70 weight percent of the polyolefin having a Shore Hardness D of less than 35 and a crystallinity of 25% or less. Layer B, in some such embodiments comprises 100 weight percent of the polyolefin having a Shore Hardness D of less than 35 and a crystallinity of 20% or less.

In some embodiments, the polyolefin in Layer B having a Shore Hardness D of less than 35 and a crystallinity of 20 % or less is an elastomeric propylene-based polymer. Examples of such elastomeric propylene-based polymers that can be used in Layer B in some embodiments of the present invention include VERSIFY™ elastomeric propylene-based polymers commercially available from The Dow Chemical Company, such as VERSIFY™ 2300.

In some embodiments, the polyolefin in Layer B having a Shore Hardness D of less than 35 and a crystallinity of 20 % or less is an olefin block copolymer. Examples of such olefin block copolymers that can be used in Layer B in some embodiments of the present invention include INFUSE™ olefin block copolymers commercially available from The Dow Chemical Company, such as INFUSE™ 9100.

In some embodiments, the polyolefin in Layer B having a Shore Hardness D of less than 35 and a crystallinity of 20 % or less is a polyolefin plastomer. Examples of such polyolefin plastomers that can be used in Layer B in some embodiments of the present invention include AFFINITY™ polyolefin plastomers commercially available from The Dow Chemical Company, such as AFFINITY™ 8100.

In some embodiments, the polyolefin in Layer B having a Shore Hardness D of less than 35 and a crystallinity of 20% or less is a block composite comprising (i) an ethylene-propylene copolymer, (ii) an isotactic polypropylene copolymer, and (iii) a block copolymer including an ethylene-propylene soft block that has a same composition as the ethylene-propylene copolymer of the block composite and an isotactic polypropylene hard block that has a same composition as the isotactic polypropylene copolymer of the block composite. Additional aspects of such block composites are as follows.

In exemplary embodiments, the block composite may have a total ethylene content that is from 25 wt% to 70 wt% (e.g., from 25 wt% to 60 wt%, from 25 wt% to 55 wt%, and from 30 wt% to 50 wt%) based on the total weight of the block composite. The remainder of the total weight of the block composite may be accounted for by units derived from at least one $C_{3-10}$ alpha-olefin. For example, the remainder of the total weight of the block composite may be accounted for by units derived from propylene.

In exemplary embodiments, the block composite refers to polymers comprising a soft copolymer having an ethylene content that is from 10 mol% to 90 mol%, a hard copolymer having a propylene content that is greater than 90 mol%, and a block copolymer (e.g., a diblock) having a soft block (i.e., soft segment) and a hard block (i.e., hard segment), wherein the hard block of the block copolymer is the same composition as the hard copolymer of the block composite and the soft block of the block copolymer is the same composition as the soft copolymer of the block composite. The compositional split between the amount of soft copolymer and hard copolymer will be essentially the same as that between the corresponding blocks in the block copolymer.

In certain embodiments, the block composite refers to polymers comprising a soft copolymer having an ethylene content that is greater than 10 wt% and less than 95 wt%, a hard copolymer having a propylene content that is greater than 80 wt% and up to 100 wt%, and a block copolymer (e.g., a diblock) having a soft block (i.e., soft segment) and a hard block (i.e., hard segment), wherein the hard block of the block copolymer is the same composition as the hard copolymer of the block composite and the soft block of the block copolymer is the same composition as the soft copolymer of the block composite. The compositional split between the amount of soft copolymer and hard copolymer will be essentially the same as that between the corresponding blocks in the block copolymer.

In exemplary embodiments, the hard blocks refer to highly crystalline blocks of polymerized alpha-olefin units (e.g., propylene). In the hard blocks, the monomer (i.e., propylene) may be present in an amount greater than 80 wt% (e.g., greater than 85 wt%, greater than 90 wt%, and/or greater than 95 wt%). The remainder of the hard block may be the comonomer (e.g., ethylene) in an amount of less than 20 wt% (e.g., less than 15 wt% and/or less than 10 wt%). In exemplary embodiments, the hard blocks comprise all or substantially all propylene units, such as an iPP (isotactic) homopolymer block or an iPP copolymer block with less than 10 wt% of ethylene. In exemplary embodiments, the soft blocks refer to amorphous, substantially amorphous, or elastomer blocks of polymerized ethylene units. In the soft blocks, the monomer (i.e., ethylene) may be present in an amount of greater than 20 wt% and equal to or less than 100 wt% (e.g., from 40 wt% to 99 wt%, from 45 wt% to 90 wt%, and/or from 50 wt% to 80 wt%). The remainder of the soft block may be the comonomer (e.g., propylene).

According to an exemplary embodiment, the block composite includes a block copolymer having 30-70 wt% hard block and 30-70 wt% soft block. In other words, the block composite includes a block copolymer having 30-70 wt% hard block and 30-70 wt% soft block based on the weight of the block copolymer.

According to an exemplary embodiment, the block copolymer of the block composite has the formula (EP)-(iPP), in which EP represents the soft block of polymerized ethylene and propylene monomeric units (e.g., 50-80 wt% of ethylene and remainder propylene) and iPP represents a hard block of isotactic propylene homopolymer or isotactic propylene copolymer (e.g., less than 10 wt% of ethylene and remainder propylene).

The block composites may include from 0.5 wt% to 95.0 wt% EP, from 0.5 to 95.0 wt% iPP, and from 5.0 wt% to 99.0 wt% of the block copolymer. Weight percents are based on total weight of block composite. The sum of the weight percents of EP, iPP, and the block copolymer equals 100%. An exemplary measurement of the relative amount of the block copolymer is referred to as the Block Composite Index (BCI), as further discussed below. The BCI for the block composite is greater than 0 and less than 1.0.

In some embodiments, the block composites may have a microstructure index greater than 1 and equal to or less than 20. The microstructure index is an estimation using solvent gradient interaction chromatography (SGIC) separation to differentiate between block copolymers from random copolymers. In particular, microstructure index estimation relies on differentiating between two fractions, i.e., a higher random copolymer content fraction and a higher block copolymer content fraction, of which the random copolymer and the block copolymer have essentially the same chemical composition. The early eluting fraction (i.e., the first fraction) correlates to random copolymers and the late eluting component (i.e., the second fraction) correlates to block copolymers. The calculation of the microstructure index is discussed below.

The block composites may have a weight average molecular weight ($M_w$) from 10,000 g/mol to 2,500,00 g/mol, from 35,000 g/mol to 1,000,000 g/mol, from 50,000 g/mol to 300,000 g/mol, and/or from 50,000 g/mol to 200,000 g/mol. For example, the $M_w$ may be from 20 kg/mol to 1,000 kg/mol, from 50 kg/mol to 500 kg/mol, and/or from 80 kg/mol to 200 kg/mol. The molecular weight distribution ($M_w/M_n$) or polydispersity of the block composites may be less than 5, between 1 and 5, and/or between 1.5 and 4. Weight average molecular weight ($M_w$) and number average molecular weight ($M_n$) are well known in polymer art and can be determined by methods known to a person of ordinary skill in the art.

The melt flow rate (MFR) of the block composites may be from 0.1 g/10 min to 1,000 g/10 min measured in accordance with ASTM D-1238 or ISO 1133 (230°C; 2.16 kg). For example, the melt flow rate of the block composites may be from 3 g/10 min to 60 g/10 min (e.g., from 3 g/10 min to 20 g/10 min, from 3 g/10 min to 15 g/10 min, and from 3 g/10 min to 10 g/10 min).

The density of the block composites may be between 0.850 and 0.920 g/cc. In exemplary embodiments, the density of the block composites is from 0.860 to 0.895, from 0.865 to 0.895, and/or from 0.865 to 0.890 g/cc. Density is measured in accordance with ASTM D792.

The block composites may have a second peak $T_m$ of greater than 90°C (e.g., greater than 100°C). According to an exemplary embodiment, the block composites exhibit a second peak $T_m$ in a range from 100°C to 150°C).

The block composites may be differentiated from conventional, random copolymers, physical blends of polymers, and block copolymers prepared via sequential monomer addition. The block composites may be differentiated from random copolymers by characteristics such as higher melting temperatures for a comparable amount of comonomer, BCI, and microstructure index; from a physical blend by characteristics such as BCI, microstructure index, better tensile strength, improved fracture strength, finer morphology, improved optics, and/or greater impact strength at lower temperature; and from block copolymers prepared by sequential monomer addition by molecular weight distribution, rheology, shear thinning, rheology ratio, and in that there is block polydispersity. For example, the block composite include a block copolymer having distinct regions or segments (referred to as "blocks") joined in a linear manner. The blocks differ, e.g., in the type of crystallinity such as polyethylene (PE) versus polypropylene (PP). The block copolymers can be linear or branched. When produced in a continuous process, the block composites may possess PDI from 1.7 to 15 (e.g., from 1.8 to 10, from 1.8 to 5, and/or from 1.8 to 3.5). When produced in a batch or semi-batch process, the block composites may possess PDI from 1.0 to 2.9 (e.g., from 1.3 to 2.5, from 1.4 to 2.0, and/or from 1.4 to 1.8). Exemplary block composites are described in, e.g., U.S. Patent No. 8,716,400, incorporated herein by reference with respect to, for example, processes to make them and methods of analyzing them.

The block composite includes the block copolymers possessing a most probable distribution of block lengths. The block copolymers may contain 2 or 3 blocks or segments. In a process for making the polymers of the block composite, chain shuttling is used as a way to prolong the lifetime of a polymer chain such that a substantial fraction of the polymer chains exit at least the first reactor of a multiple reactor series or the first reactor zone in a multiple zoned reactor operating substantially under plug flow conditions in the form of polymer terminated with a chain shuttling agent, and the polymer chain experiences different polymerization conditions in the next reactor or polymerization zone. Different polymerization conditions in the respective reactors or zones include the use of different monomers, comonomers, or monomer/comonomer(s) ratio, different polymerization temperatures, pressures or partial pressures of various monomers, different catalysts, differing monomer gradients, or any other difference leading to formation of a distinguishable polymer segment. Thus, at least a portion of the polymer comprises two, three, or more, preferably two or three, differentiated polymer segments arranged intramolecularly.

The block composite polymers are prepared, e.g., by a process comprising contacting an addition polymerizable monomer or mixture of monomers under addition polymerization conditions with a composition comprising at least one addition polymerization catalyst, a cocatalyst, and a chain shuttling agent. The process is characterized by formation of at least some of the growing polymer chains under differentiated process conditions in two or more reactors operating under steady state polymerization conditions or in two or more zones of a reactor operating under plug flow polymerization conditions.

Suitable processes useful in producing the block composites may be found in, e.g. example, U.S. Patent Nos. 8,053,529, 8,686,087, and 8,716,400. The polymerization may be carried out as a continuous polymerization, e.g., a continuous-solution polymerization, in which catalyst components, monomers, and optionally solvent, adjuvants, scavengers, and/or polymerization aids are continuously supplied to one or more reactors or zones and polymer product continuously removed therefrom. Within the scope of the terms "continuous" and "continuously" as used in this context are those processes in which there are intermittent additions of reactants and removal of products at small regular or irregular intervals, so that, over time, the overall process is substantially continuous. Further, a chain shuttling agent(s) may be added at any point during the polymerization including in a first reactor or zone, at the exit or slightly before the exit of the first reactor, between the first reactor or zone and a second or any subsequent reactor or zone, or even solely to the second or any subsequent reactor or zone. Exemplary chain shuttling agents, catalysts, and cocatalysts are those disclosed in, e.g., U.S. Patent No. 7,951,882 and WO 2011/016991 A2. For example, chain shuttling agents that are dialkyl zinc compounds may be used.

The catalyst may be prepared as a homogeneous composition by addition of the requisite metal complex or multiple complexes to a solvent in which the polymerization will be conducted or in a diluent compatible with the ultimate reaction mixture. The desired cocatalyst or activator and, optionally, the shuttling agent may be combined with the catalyst composition either prior to, simultaneously with, or after combination of the catalyst with the monomers to be polymerized and any additional reaction diluent.

Due to the difference in monomers, temperatures, pressures, or other differences in polymerization conditions between at least two of the reactors or zones connected in series, polymer segments of differing composition such as comonomer content, crystallinity, density, tacticity, regio-regularity, or other chemical or physical difference, within the same molecule are formed in the different reactors or zones. The size of each segment or block is determined by continuous polymer reaction conditions, and preferably is a most probable distribution of polymer sizes. Each reactor in the series can be operated under high pressure, solution, slurry, or gas phase polymerization conditions.

In the following exemplary processes, continuous or substantially continuous polymerization conditions may be employed. In a multiple zone polymerization, all zones operate under the same type of polymerization, such as solution, slurry, or gas phase, but at different process conditions. For a solution polymerization process, it is desirable to employ homogeneous dispersions of the catalyst components in a liquid diluent in which the polymer is soluble under the polymerization conditions employed. A high pressure process may be carried out at temperatures from 100°C to 400°C and at pressures above 500 bar (50 MPa). A slurry process may use an inert hydrocarbon diluent and temperatures of from 0°C up to a temperature just below the temperature at which the resulting polymer becomes substantially soluble in the inert polymerization medium. Exemplary temperatures in a slurry polymerization are from 30°C and pressures may range from atmospheric (100 kPa) to 500 psi (3.4 MPa).

Without limiting in any way the scope of the embodiments, one means for carrying out such a polymerization process is as follows. In one or more well stirred tank or loop reactors operating under solution polymerization conditions, the monomers to be polymerized are introduced continuously together with any solvent or diluent at one part of the reactor. The reactor contains a relatively homogeneous liquid phase composed substantially of monomers together with any solvent or diluent and dissolved polymer. Exemplary solvents include $C_{4-10}$ hydrocarbons or mixtures thereof, especially alkanes such as hexane or mixtures of alkanes, as well as one or more of the monomers employed in the polymerization. Catalyst along with cocatalyst and optionally chain shuttling agent are continuously or intermittently introduced in the reactor liquid phase or any recycled portion thereof at a minimum of one location.

The reactor temperature and pressure may be controlled by adjusting the solvent/monomer ratio, the catalyst addition rate, as well as by use of cooling or heating coils, jackets or both. The polymerization rate is controlled by the rate of catalyst addition. The content of a given monomer in the polymer product is influenced by the ratio of monomers in the reactor, which is controlled by manipulating the respective feed rates of these components to the reactor. The polymer product molecular weight is controlled, optionally, by controlling other polymerization variables such as the temperature, monomer concentration, or by the previously mentioned chain shuttling agent, or a chain terminating agent such as hydrogen. Connected to the discharge of the reactor, optionally by means of a conduit or other transfer means, is a second reactor, such that the reaction mixture prepared in the first reactor is discharged to the second reactor without substantially termination of polymer growth. Between the first and second reactors, a differential in at least one process condition is established. For example, use in formation of a copolymer of two or more monomers, the difference is the presence or absence of one or more comonomers or a difference in comonomer concentration. Additional reactors, each arranged in a manner similar to the second reactor in the series may be provided as well. Upon exiting the last reactor of the series, the effluent is contacted with a catalyst kill agent such as water, steam or an alcohol or with a coupling agent. The resulting polymer product is recovered by flashing off volatile components of the reaction mixture such as residual monomers or diluent at reduced pressure, and, if necessary, conducting further devolatilization in equipment such as a devolatilizing extruder.

Alternatively, the foregoing polymerization may be carried out in a plug flow reactor with a monomer, catalyst, shuttling agent, temperature or other gradient established between differing zones or regions thereof, optionally accompanied by separated addition of catalysts and/or chain shuttling agent, and operating under adiabatic or non-adiabatic polymerization conditions.

Combinations of such polyolefins (elastomeric propylene-based polymers, olefin block copolymers, polyolefin plastomers, and/or block composites as described above) can also be used in Layer B in some embodiments (e.g., two or more of such polyolefins having a Shore Hardness D of less than 35 and a crystallinity of 20% or less).

In addition to the polyolefin having a Shore Hardness D of less than 35 and a crystallinity of 20% or less, in some embodiments where Layer B comprises a blend of polymers, Layer B further comprises at least one additional polyolefin. In some embodiments, the at least one additional polyolefin in Layer B comprises at least one polyethylene. In such embodiments, Layer B can further comprise any polyethylene known to those of skill in the art to be suitable for use as a layer in a multilayer film and combinations thereof, based on the teachings herein. In selecting a polyethylene or blend of polyethylenes for the remainder of Layer B, such polyethylene(s) and relative amount(s) can be selected so as to provide Layer B overall with a Shore Hardness D of less than 50 and a crystallinity of 44% or less (or other desired Shore Hardness D and crystallinity values). For example, the polyethylene that can be used in Layer B, in some embodiments, can be ultralow density polyethylene (ULDPE), low density polyethylene (LDPE), linear low density polyethylene (LLDPE), medium density polyethylene (MDPE), high density polyethylene (HDPE), high melt strength high density polyethylene (HMS-HDPE), ultrahigh density polyethylene (UHDPE), enhanced polyethylenes, and others, and combinations thereof.

Layer C

Multilayer films of the present invention include a third layer (Layer C) having a top facial surface and a bottom facial surface, wherein the top facial surface of Layer C is in adhering contact with a bottom facial surface of Layer B.

In some embodiments, Layer C has a Shore Hardness D of 50 or more and a crystallinity of 47% or more.

The polyethylene in Layer C can be particularly desirable in some embodiments as it can permit the coextrusion of Layer C with Layers A and B. In general, Layer C can comprise any polyethylene known to those of skill in the art to be suitable for use as a layer in a multilayer film based on the teachings herein. For example, the polyethylene that can be used in Layer C, in some embodiments, can be ultralow density polyethylene (ULDPE), low density polyethylene (LDPE), linear low density polyethylene (LLDPE), medium density polyethylene (MDPE), high density polyethylene (HDPE), high melt strength high density polyethylene (HMS-HDPE), ultrahigh density polyethylene (UHDPE), enhanced polyethylenes, and others.

Other Layers

Some embodiments of multilayer films of the present invention can include layers beyond those described above. In such embodiments comprising four or more layers, the top facial surface of Layer A (the sealant layer) would still be the top facial surface of the film. In other words, any additional layers would be in adhering contact with a bottom facial surface of Layer C, or another intermediate layer.

In some embodiments, a multilayer film of the present invention comprises at least 5 layers. For example, such a multilayer film can comprise Layer D and Layer E, wherein a top facial surface of Layer D is in adhering contact with the bottom facial surface of Layer C, and wherein a top facial surface of Layer E is in adhering contact with a bottom facial surface of Layer D. A multilayer film of the present invention, in some embodiments, comprises at least 7 layers.

For example, a multilayer film can further comprise other layers typically included in multilayer films depending on the application including, for example, barrier layers, tie layers, polyethylene layers, polypropylene layers, etc.

Depending on the composition of the additional layer and the multilayer film, in some embodiments, the additional layer can be coextruded with other layers in the film,

Additives

It should be understood that any of the foregoing layers can further comprise one or more additives as known to those of skill in the art such as, for example, antioxidants, ultraviolet light stabilizers, thermal stabilizers, slip agents, antiblock, pigments or colorants, processing aids, crosslinking catalysts, flame retardants, fillers and foaming agents.

Multilayer films comprising the combinations of layers disclosed herein can have a variety of thicknesses depending, for example, on the number of layers, the intended use of the film, and other factors. Multilayer films of the present invention, in some embodiments, have a thickness of 25 to 200 microns (typically, 35-150 microns).

Some embodiments of the present invention also relate to laminates. In some such embodiments, a laminate comprises a first film laminated to a multilayer film according to any of the embodiments disclosed herein. The first film can be, for example, aluminum foil, polyethylene, polyethylene terephthalate, polypropylene, polyamide, cast polypropylene, oriented polyamide, paper, as well as metallized and coated versions of such films (e.g., coated with silicon dioxide, aluminum oxide, polyvinylidene chloride, ethylene vinyl acetate, polyvinyl alcohol, or acrylics), in various embodiments.

The first film can comprise polyethylene terephthalate, in some embodiments. For example, in some embodiments, the multilayer film comprises a polyethylene terephthalate layer, and a top facial surface of the polyethylene terephthalate layer is laminated to a bottom facial surface of Layer C. In such embodiments, any polyethylene terephthalate known to those of skill in the art based on the teachings herein can be used.

In some embodiments, the first film can comprise polypropylene such as, for example, an oriented polypropylene film. For example, in some embodiments, the multilayer film comprises a polypropylene layer, and a top facial surface of the polypropylene layer is laminated to a bottom facial surface of Layer C. In such embodiments, any polypropylene known to those of skill in the art (e.g., oriented polypropylene film) based on the teachings herein can be used.

Methods of Preparing Multilayer Films

Multilayer films can be formed using techniques known to those of skill in the art based on the teachings herein. For example, for those layers that can be coextruded, such layers can be coextruded as blown films or cast films using techniques known to those of skill in the art based on the teachings herein. In particular, based on the compositions of the different film layers disclosed herein, blown film manufacturing lines and cast film manufacturing lines can be configured to coextrude multilayer films of the present invention in a single extrusion step using techniques known to those of skill in the art based on the teachings herein.

In some embodiments, multilayer films may comprise a plurality of layers that are coextruded and then laminated to one or more additional layers. In such embodiments, a facial surface of the coextruded film can be laminated to a facial surface of another film layer using techniques known to those of skill in the art based on the teachings herein. For example, in one embodiment, a multilayer film of the present invention can be reverse-printed on the outer surface opposite the outer surface provided by the outer layer, and then laminated to another film (e.g., another polyethylene film). In such an embodiment, the outer layer of the multilayer film of the present invention can provide improved heat resistance and optical properties.

In some embodiments, an outer surface of the multilayer film can be printed using techniques known to those of skill in the art based on the teachings herein.

Packages

Multilayer films of the present invention can be used to form a package. Such packages can be formed from any of the multilayer films and laminates described herein. Examples of such packages can include flexible packages, pouches, stand-up pouches, and pre-made packages or pouches. In some embodiments, multilayer films of the present invention can be used for food packages. Examples of food that can be included in such packages include meats, cheeses, cereal, nuts, juices, sauces, and others. Such packages can be formed using techniques known to those of skill in the art based on the teachings herein and based on the particular use for the package (e.g., type of food, amount of food, etc.).

Packages utilizing multilayer films of the present invention can advantageously be formed with heat seal packaging equipment utilizing continuously heated seal bars, in some embodiments. The thermal resistance properties of the outer layer of the multilayer films help protect the film structure during formation of the package with the continuously heated seal bars. Examples of such packaging equipment utilizing continuously heated seal bars include horizontal form-fill-seal machines and vertical form-fill-seal machines. Examples of packages that can be formed from such equipment include stand-up pouches, 4-corner packages (pillow pouches), fin seal packages and others.

In some embodiments, a package incorporates a nonwoven layer and a multilayer film according to any of the embodiments disclosed herein. In some embodiments, the nonwoven layer forms an outer layer of the package.

As used herein, the term nonwoven layer means a layer of material made from fibers bonded together by chemical, mechanical, heat or solvent treatment. Any nonwoven format made by any appropriate method may be used, such as those described in EP 1 745 171, and US Patent Application Publication No. 20140248811, the disclosures of which are incorporated herein by reference. The nonwoven material may be spunbond, melt blown, carded staple, spunlaced, air laid or air through formed. In another embodiment, the nonwoven layer may be a web having a combination of such nonwoven forms. For example, but not limited to, the nonwoven layer may be a spun bond/melt blown/spun bond web (SMS), a spun bond/melt blown/melt blown/spun bond web (SMMS), or spun bond/X/melt blown/melt blown/X/spun bond web (SXMMXS), where X can be any nonwoven form, including spun bond and melt blown.

Suitable polymers for the production of nonwoven materials (biaxially oriented polypropylene monocomponent spunbond nonwoven) include Braskem H502-25RG Polypropylene Resin (a homopolymer resin suitable for the use in spunbonded nonwovens production equipment and other fiber spinning processes); Braskem H502-25RG (a polypropylene resin which is a controlled rheology polypropylene offering excellent processability at melt temperatures between 220 and 280°C); and Braskem H502-25RG (a polypropylene resin which is modified to resist gas fading), all of which are commercially available from Braskem (Philadelphia, PA, USA). Other polymers include the polypropylene homopolymer grade HH450FB which is intended for fiber applications (commercially available from Borealis AG (Vienna, Austria)).

In one embodiment, the nonwoven layer is a spun bond nonwoven having a density which ranges from 15 gsm (grams per square meter) to 100 gsm. All individual values and subranges from 15 to 100 gsm are included and disclosed herein; for example the density of the spun bond nonwoven material can range from a lower limit of 15, 30, 45, 60, 75 or 90 gsm to an upper limit of 20, 35, 50, 65, 80, 95 or 100 gsm. For example, the density of the spun bond nonwoven material may be from 15 to 100 gsm, or in the alternative, from 15 to 60 gsm, or in the alternative, from 50 to 100 gsm, or in the alternative, from 25 to 75 gsm. In another embodiment, the fibers of the spun bond nonwoven material has a denier per filament between 1.5 and 3.5 dpf. All individual values and subranges from 1.5 to 3.5 dpf are included and disclosed herein; for example, the denier per filament can range from a lower limit of 1.5, 2.0, 2.5, or 3.0 dpf to an upper limit of 2.0, 2.5, 3.0 or 3.5 dpf. For example, the denier per filament can range from 1.5 to 3.5 dpf, or in the alternative, from 1.5 to 2.5 dpf, or in the alternative, from 2.5 to 3.0 dpf, or in the alternative, from 2 to 3 dpf.

The fibers used to make the nonwoven may be monocomponent or bicomponent fibers. Monocomponent fibers are typically formed from propylene-based polymer, ethylene-based polymer, or polyethyleneterephthalate. Bicomponent fibers are typically formed from combinations of propylene-based polymer, ethylene-based polymer, and polyethylene terephthalate. For example, the bicomponent fibers may be polyethylene terephthalate/ethylene-based polymer, or polyethyleneterephthalate/propylene-based polymer, or propylene-based polymer/ethylene-based polymer, where the first mentioned polymer forms the core of the fiber and the second mentioned polymer forms the sheath of the fiber.

In a particular embodiment, the nonwoven layer is a spunbound polypropylene-based nonwoven of from 15 to 100 gsm. All individual values and subranges from 15 to 100 gsm are included and disclosed herein; for example, when the basis weight of the spunbound polypropylene-based nonwoven can range from a lower limit of 15, 30, 45, 60, 75 or 90 gsm to an upper limit of 20, 35, 50, 65, 80, 95 or 100 gsm. For example, the basis weight can range from 15 to 100 gsm, or in the alternative, from 15 to 57 gsm, or in the alternative, from 55 to 100 gsm, or in the alternative, from 25 to 90 gsm, or in the alternative, from 45 to 70 gsm.

In a particular embodiment, the nonwoven layer wherein the nonwoven layer exhibits a 45 degree gloss of equal to or less than 30%. All individual values and subranges from less than or equal to 30% are included and disclosed herein. For example, the gloss of the nonwoven layer can be equal to or less than 30%, or in the alternative, equal to or less than 20%, or in the alternative, equal to or less than 15%, or in the alternative, equal to or less than 10%.

In another embodiment, the nonwoven layer is coated with a varnish. The varnish may be a heat resistant varnish, such as those commercially available from Siegwerk Druckfarben AG & Co. (Siegburg, Germany). In a particular embodiment, the melting point of the nonwoven material is less than or equal to 140 °C and the nonwoven layer is coated with a varnish. The melting point of the nonwoven material, as used herein, means the bulk melting point for a monocomponent fiber based nonwoven material or the melting point of the exterior of a bicomponent fiber based nonwoven material. In yet another embodiment, the nonwoven layer comprises bicomponent fibers wherein a difference in a melting point of an internal fiber component and a melting point of an external fiber component is at least 40 °C. All individual values and subranges from at least 40 °C are included and disclosed herein; for example, the difference in the melting points can range from at least 40 °C, or in the alternative, the difference in the melting points can range from at least 50 °C, or in the alternative, the difference in the melting points can range from at least 60 °C. In an alternative embodiment, the difference in melting points is no greater than 100 °C.

A lamination adhesive may be used to adhere the nonwoven layer to the multilayer film in some embodiments. The lamination adhesive may be any suitable lamination adhesive, including solvent free and solvent based adhesives. Exemplary lamination adhesive include those commercially available from The Dow Chemical Company (Midland, MI, USA) under the names MOR-FREE™ ELM, MOR-FREE™ L, and MOR-FREE™ LPlus. In one embodiment, the lamination adhesive has a curing temperature equal to or less than 80 °C. In alternative embodiments, the multilayer film may alternatively be co-extruded directly onto the nonwoven layer.

**Test Methods**

Test methods include the following:

*Density*

Samples that are measured for density are prepared according to ASTM D4703. Measurements are made within one hour of sample pressing using ASTM D792, Method B.

*Melt Index*

Melt index ($I_2$) is measured in accordance with ASTM D1238, Condition 190 ° C/2.16 kg, and is reported in grams eluted per 10 minutes. Melt flow rate ($I_{10}$) is measured in accordance with ASTM D1238, Condition 190° C/10 kg, and is reported in grams eluted per 10 minutes.

*Percent Crystallinity (for non-Block Composites)*

Differential Scanning Calorimetry (DSC) is used to measure the melting and crystallization behavior of a polymer over a wide range of temperatures. The following technique is used to measure percent crystallinity for polymers, other than block composites. When the polymer is a block composite, the technique described below in the *Percent Crystallinity (for Block Composites)* section is used. A TA Instruments Q1000 DSC, equipped with an RCS (refrigerated cooling system) and an autosampler are used to perform this analysis. During testing, a nitrogen purge gas flow of 50 ml/min is used. Each sample is melt pressed into a thin film at about 175°C; the melted sample is then air-cooled to room temperature (approx. 25°C). The film sample is formed by pressing a "0.1 to 0.2 gram" sample at 175°C at 1,500 psi, and 30 seconds, to form a "0.1 to 0.2 mil thick" film. A 3-10 mg, 6 mm diameter specimen is extracted from the cooled polymer, weighed, placed in a light aluminum pan (ca 50 mg), and crimped shut. Analysis is then performed to determine its thermal properties.

The thermal behavior of the sample is determined by ramping the sample temperature up and down to create a heat flow versus temperature profile. First, the sample is rapidly heated to 180°C, and held isothermal for five minutes, in order to remove its thermal history. Next, the sample is cooled to -40°C, at a 10 °C/minute cooling rate, and held isothermal at -40°C for five minutes. The sample is then heated to 150°C (this is the "second heat" ramp) at a 10°C/minute heating rate. The cooling and second heating curves are recorded. The cool curve is analyzed by setting baseline endpoints from the beginning of crystallization to -20°C. The heat curve is analyzed by setting baseline endpoints from - 20°C to the end of melt. The values determined are peak melting temperature ($T_m$), peak crystallization temperature

($T_c$), heat of fusion ($H_f$) (in Joules per gram), and the calculated % crystallinity for the samples using: % Crystallinity = (($H_f$)/(292 J/g)) $\times$ 100. The heat of fusion ($H_f$) and the peak melting temperature are reported from the second heat curve. Peak crystallization temperature can be determined from the cooling curve.

The percent crystallinity of a layer in a multilayer film is determined by multiplying the weight percent of each polymer component in that layer by the polymer component's percent crystallinity, and then adding the products:

$$\% \, Crystallinity \, of \, Layer = \sum_{1}^{n} \left( \frac{\begin{array}{c} Wt. Percent \, of \, Component \, n \\ in \, Layer \end{array}}{100} \right) (\% \, Crystallinity \, of \, Component \, n)$$

where n is the number of components in the layer. Thus, if a layer comprises 50% of an LLDPE and 50% of a block composite, the percent crystallinity will be calculated by adding one half of the crystallinity of the LLDPE (using the *Percent Crystallinity (for non-Block Composites)* method above) and one half of the crystallinity of the block copolymer (using the *Percent Crystallinity (for Block Composites)* method below).

*Shore Hardness D*

Granules of the film layer to be measured are prepared using a BUSS Model MDK/E46 Kneader Compounder with a primary screw diameter of 46 mm, a primary screw maximum speed of 300 rpm, a secondary screw diameter of 32 mm, a secondary screw maximum speed of 180 rpm, and two cutting knives. The dosing system is an Automatic Katron Soder system using pellets or powder additives. An oil bath controlled/water cooled cooling system is used. The various compounds prepared from the film layer on the BUSS compounder are then used to prepare compression moulded samples via ISO 1872-2. These samples are then used to generate Shore Hardness data using ASTM D2240-05.

*High Temperature Liquid Chromatography:*

High Temperature Liquid Chromatography Experimental Method Instrumentation is the HTLC experiment, which is done according to the published method with minor modifications (Lee, D.; Miller, M. D.; Meunier, D. M.; Lyons, J. W.; Bonner, J. M.; Pell, R. J.; Shan, C. L. P.; Huang, T. *J. Chromatogr. A* 2011, *1218*, 7173). Two Shimadzu (Columbia, MD, USA) LC-20AD pumps are used to deliver decane and trichlorobenzene (TCB) respectively. Each pump is connected to a 10:1 fixed flow splitter (Part #: 620-PO20-HS, Analytical Scientific Instruments Inc., CA, USA). The splitter has a pressure drop of 1500 psi at 0.1 mL/min in $H_2O$ according to the manufacturer. The flow rates of both pumps are set at 0.115 mL/min. After the splitting, the minor flow is 0.01 mL/min for both decane and TCB, determined by weighing the collected solvents for more than 30 min. The volume of the collected eluent is determined by the mass and the densities of the solvents at room temperature. The minor flow is delivered to the HTLC column for separation. The main flow is sent back to the solvent reservoir. A 50-$\mu$L mixer (Shimadzu) is connected after the splitters to mix the solvents from Shimadzu pumps. The mixed solvents are then delivered to the injector in the oven of Waters (Milford, MA, USA) GPCV2000. A Hypercarb™ column (2.1 $\times$ 100 mm, 5 $\mu$m particle size) is connected between the injector and a 10-port VICI valve (Houston, TX, USA). The valve is equipped with two 60-$\mu$L sample loops. The valve is used to continuously sample eluent from the first dimension (D1) HTLC column to the second dimension (D2) SEC column. The pump of Waters GPCV2000 and a PLgel Rapid™-M column (10 $\times$ 100 mm, 5 $\mu$m particle size) are connected to the VICI valve for D2 size exclusion chromatography (SEC). The symmetric configuration is used for the connections as described in the literature (Brun, Y.; Foster, P. *J. Sep. Sci.* 2010, 33, 3501). A dual-angle light scattering detector (PD2040, Agilent, Santa Clara, CA, USA) and an IR5 inferred absorbance detector are connected after the SEC column for measurement of concentration, composition, and molecular weight. *Separation for HTLC:* Approximately 30 mg are dissolved in 8-mL decane by gently shaking the vial at 160 °C for 2 hours. The decane contains 400 ppm BHT(2,6-Di-tert-butyl-4-methylphenol) as the radical scavenger. The sample vial is then transferred to the autosampler of GPCV2000 for injection. The temperatures of the autosampler, the injector, both the Hypercarb and the PLgel columns, the 10-port VICI valve, and both the LS and IR5 detectors are maintained at 140 °C throughout the separation.

The initial conditions before injection are as follows. The flow rate for the HTLC column is 0.01 mL/min. The solvent composition in the D1 Hypercarb column is 100% decane. The flow rate for the SEC column is 2.51 mL/min at room temperature. The solvent composition in the D2 PLgel column is 100% TCB. The solvent composition in the D2 SEC column does not change throughout the separation.

A 311-$\mu$L aliquot of sample solution is injected into the HTLC column. The injection triggers the gradient described below:

From 0 - 10 min, 100% decane/ 0% TCB;
From 10 - 651 min, TCB is increased linearly from 0% TCB to 80% TCB.

The injection also triggers the collection of the light scattering signal at 15° angle (LS15) and the "measure" and "methyl" signals from IR5 detector ($IR_{measure}$ and $IR_{methyl}$) using EZChrom™ chromatography data system (Agilent). The analog signals from detectors are converted to digital signals through a SS420X analog-to-digital converter. The collection frequency is 10 Hz. The injection also triggers the switch of the 10-port VICI valve. The switch of the valve is controlled by the relay signals from the SS420X converter. The valve is switched every 3 min. The chromatograms are collected from 0 to 651 min. Each chromatogram consist of 651/3 = 217 SEC chromatograms.

After the gradient separation, 0.2 mL of TCB and 0.3 mL of decane are used to clean and re-equilibrate the HTLC column for next separation. The flow rate of this step is 0.2 mL/min, delivered by a Shimadzu LC-20 AB pump connected to the mixer.

*Data Analysis for HTLC:* The 651 min raw chromatogram is first unfolded to give 217 SEC chromatograms. Each chromatogram is from 0 to 7.53 mL in the unit of 2D elution volume. The integration limit is then set and the SEC chromatograms undergo spike removal, baseline correction, and smoothing. The process is similar to batch analysis of multiple SEC chromatograms in conventional SEC. The sum of all the SEC chromatograms is inspected to ensure both left side (upper integration limit) and right side (lower integration limit) of the peak were at the baseline as zero. Otherwise, the integration limit is adjusted to repeat the process.

Each SEC chromatogram *n* from 1 to 217 yields an X-Y pair in the HTLC chromatogram, where *n* is the fraction number:

$$X_n = \text{elution volume (mL)} = D1 \text{ flow rate} \times n \times t_{switch}$$

where $t_{switch}$ = 3min is the switch time of the 10-port VICI valve.

$$Y_n = \text{signal intensity (Voltage)} = \sum_{peak\,start}^{peak\,end} IR_{measure,n}$$

The above equation uses $IR_{measure}$ signal as the example. The obtained HTLC chromatogram shows the concentrations of the separated polymeric components as a function of elution volume. The normalized $IR_{measure}$ HTLC chromatogram includes Y represented by dW/dV, meaning the normalized weight fractions with respect to the elution volume.

X-Y pairs of data are also obtained from $IR_{methyl}$ and LS 15 signals. The ratio of $IR_{methyl}/IR_{measure}$ is used to calculate composition after calibration. The ratio of $LS15/IR_{measure}$ is used to calculate weight-average molecular weight ($M_w$) after calibration. Calibration follows the procedures of Lee et al., *ibid.* High density polyethylene (HDPE), *isotactic* polypropylene (*i*PP), and ethylene-propylene copolymer with propylene contents of 20.0, 28.0, 50.0, 86.6, 92.0, and 95.8 wt% P are used as the standards for $IR_{methyl}/IR_{measure}$ calibration. The composition of the standards are determined by NMR. The standards are run by SEC with IR5 detector. The obtained $IR_{methyl}/IR_{measure}$ ratios of the standards are plotted as a function of their compositions, yielding the calibration curve.

The HDPE reference is used for routine LS 15 calibration. The $M_w$ of the reference is predetermined by GPC as 104.2 kg/mol with LS and RI (refractive index) detectors. GPC uses NBS 1475 as the standard in GPC. The standard has a certified value of 52.0 kg/mol by NIST. Between 7 to 10 mg of the standard is dissolved in 8-mL decane at 160 °C. The solution is injected to the HTLC column in 100% TCB. The polymer is eluted under constant 100% TCB at 0.01 mL/min. Therefore, the peak of the polymer appears at the HTLC column void volume. A calibration constant, $\Omega$, is determined from the total LS 15 signals ($A_{LS15}$) and the total $IR_{measure}$ signals ($A_{IR,measure}$):

$$\Omega = \frac{A_{LS15}}{A_{IR,measure} M_w}$$

The experimental $LS15/IR_{measure}$ ratio is then converted to $M_w$ through $\Omega$.

*$C^{13}$ Nuclear Magnetic Resonance (NMR):*

For Sample Preparation, samples are prepared by adding approximately 2.7g of a 50/50 mixture of tetrachloroethane-d2/orthodichlorobenzene that is 0.025M in chromium acetylacetonate (relaxation agent) to 0.21g sample in a 10mm NMR tube. The samples are dissolved and homogenized by heating the tube and its contents to 150°C.

For Data Acquisition Parameters, data is collected using a Bruker 400 MHz spectrometer equipped with a Bruker Dual DUL high-temperature CryoProbe. The data is acquired using 320 transients per data file, a 7.3 sec pulse repetition delay (6 sec delay + 1.3 sec acq. time), 90 degree flip angles, and inverse gated decoupling with a sample temperature of 125°C. All measurements are made on non-spinning samples in locked mode. Samples are homogenized immediately prior to insertion into the heated (130°C) NMR Sample changer, and are allowed to thermally equilibrate in the probe for 15 minutes prior to data acquisition. The NMR may be used to determine total weight percent of ethylene, e.g., with respect to the and modified block composite index discussed below.

*Percent Crystallinity (for Block Composites)*

Differential Scanning Calorimetry (DSC) is used to measure crystallinity in block composites as follows. About 5 to 8 mg of polymer sample is weighed and placed in a DSC pan. The lid is crimped on the pan to ensure a closed atmosphere. The sample pan is placed in a DSC cell, and then heated, at a rate of approximately 10°C/min, to a temperature of 180°C for PE (230°C for polypropylene or "PP"). The sample is kept at this temperature for three minutes. Then the sample is cooled at a rate of 10°C/min to -60°C for PE (-40°C for PP), and kept isothermally at that temperature for three minutes. The sample is next heated at a rate of 10°C/min, until complete melting (second heat). The percent crystallinity is calculated by dividing the heat of fusion ($H_f$), determined from the second heat curve, by a theoretical heat of fusion of 292 J/g for PE (165 J/g, for PP), and multiplying this quantity by 100 (for example, % cryst. = ($H_f$ / 292 J/g) x 100 (for PE)).

Unless otherwise stated, melting point(s) ($T_m$) of each polymer is determined from the second heat curve (peak Tm), and the crystallization temperature ($T_c$) is determined from the first cooling curve (peak Tc).

Molecular weight distribution (MWD) is measured using Gel Permeation Chromatography (GPC). In particular, conventional GPC measurements are used to determine the weight-average (Mw) and number-average (Mn) molecular weight of the polymer, and to determine the MWD (which is calculated as Mw/Mn). Samples are analyzed with a high-temperature GPC instrument (Polymer Laboratories, Inc. model PL220). The method employs the well-known universal calibration method, based on the concept of hydrodynamic volume, and the calibration is performed using narrow polystyrene (PS) standards, along with four Mixed A $20\mu m$ columns (PLgel Mixed A from Agilent (formerly Polymer Laboratory Inc.)) operating at a system temperature of 140°C. Samples are prepared at a "2 mg/mL" concentration in 1,2,4-trichlorobenzene solvent. The flow rate is 1.0 mL/min, and the injection size is 100 microliters.

As discussed, the molecular weight determination is deduced by using narrow molecular weight distribution polystyrene standards (from Polymer Laboratories) in conjunction with their elution volumes. The equivalent polyethylene molecular weights are determined by using appropriate Mark-Houwink coefficients for polyethylene and polystyrene (as described by Williams and Ward in Journal of Polymer Science, Polymer Letters, Vol. 6, (621) 1968) to derive the following equation:

$$\mathrm{Mpolyethylene} = a * (\mathrm{Mpolystyrene})^b.$$

In this equation, a = 0.4316 and b = 1.0 (as described in Williams and Ward, J. Polym. Sc., Polym. Let., 6, 621 (1968)). Polyethylene equivalent molecular weight calculations were performed using VISCOTEK TriSEC software Version 3.0.

Some embodiments of the invention will now be described in detail in the following Examples.

Examples

Laminated films are prepared by a laminating a variety of multilayer films to an oriented polypropylene film.

The multilayer films are fabricated using a semi-industrial scale Alpine blown film three-layer line. Each of the films is a three layer film having an A/B/C structure with relative thicknesses of 20%/60%/20% for a total thickness of 50 microns. The Alpine blown film line is configured as shown in Table 1 to prepare the multilayer films:

**Table 1**

| Main components | ALPINE inner bubble control<br>MACRO dual lip cooling ring<br>DOTECO Profix thickness profile control<br>KUNDIG capacitive thickness sensor<br>Tandem winder(contact/surface mode) |
|---|---|
| Monolayer film screw diameter | 65 mm |
| Monolayer screw length | 30xD |
| Maximum output (monolayer) | 80 kg/h |
| Coex screw diameter (A & C) | 50 mm |
| Coex screw length (A & C) | 30xD |
| Coex screw diameter (B) | 65 mm |
| Coex screw diameter (B) | 30xD |
| Maximum output (coex) | 220 kg/h (Thin Skin layers preferably around 10-25%) |
| Die size | 200 mm |

The raw materials shown in Table 2 are used to prepare the multilayer films:

**Table 2**

| Product | Type (Abbreviation) | Melt Index $(I_2)$ (dg/min) | Density $(g/cm^3)$ | Shore Hardness D/ Total Crystallinity (%) |
|---|---|---|---|---|
| AFFINITY™ EG 8100G | Polyolefin Plastomer (AFFINITY™ 8100) | 1.0 | 0.870 | 22/18 |
| AFFINITY™ PL 1881G | Polyolefin Plastomer (AFFINITY™ 1881) | 1.0 | 0.904 | 44/36.5 |
| DOW™ LDPE 312E | LDPE (LDPE) | 0.75 | 0.923 | 56/49.9 |
| DOWLEX™ NG 5056.01G | LLDPE (LDPE) | 1.1 | 0.921 | 51/47 |
| INFUSE™ 9107 | Olefin Block Copolymer (OBC) | 1 | 0.866 | 8/11 |
| Block Composite Described Below | Block Composite (BC1) | 3 | 0.8724 | 21/11 |
| VERSIFY™ 2300 | Elastomeric Propylene-based Polymer (EPBP) | 2* | 0.8665 | 32/13 |
| * This $I_2$ value is nominal at 230° C. | | | | |

With the exception of the Block Composite (BC1), each of the above resins are commercially available from The Dow Chemical Company.

BC1 is prepared as follows. BC1 is an olefin block copolymer, also referred to as a block composite, that includes 70 wt% of an ethylene-propylene copolymer (having an ethylene content of 65 wt%) and 30 wt% of isotactic polypropylene containing approximately 2.8 wt% ethylene.

BC1, as well as other block composite polymers that can be used in embodiments of the present invention, may be prepared by a process comprising contacting an addition polymerizable monomer or mixture of monomers under addition polymerization conditions with a composition comprising at least one addition polymerization catalyst, at least one cocatalyst, and a chain shuttling agent, said process being characterized by formation of at least some of the growing polymer chains under differentiated process conditions in two or more reactors operating under steady state polymerization conditions or in two or more zones of a reactor operating under plug flow polymerization conditions. The term, "shuttling agent" refers to a compound or mixture of compounds that is capable of causing polymeryl exchange between at least two active catalyst sites under the conditions of the polymerization. That is, transfer of a polymer fragment occurs both to and from one or more of the active catalyst sites. In contrast to a shuttling agent, a "chain transfer agent" causes termination of polymer chain growth and amounts to a one-time transfer of growing polymer from the catalyst to the transfer agent. In a preferred embodiment, the block composites comprise a fraction of block polymer which possesses a most probable distribution of block lengths.

Suitable processes useful in producing BC1 and other block composites may be found, for example, in U.S. Patent Nos. 8,053,529, 8,686,087, and 8,716,400. In particular, the polymerization is desirably carried out as a continuous polymerization, preferably a continuous, solution polymerization, in which catalyst components, monomers, and optionally solvent, adjuvants, scavengers, and polymerization aids are continuously supplied to one or more reactors or zones and polymer product continuously removed therefrom. Within the scope of the terms "continuous" and "continuously" as used in this context are those processes in which there are intermittent additions of reactants and removal of products at small regular or irregular intervals, so that, over time, the overall process is substantially continuous. The chain shuttling agent(s) may be added at any point during the polymerization including in the first reactor or zone, at the exit or slightly before the exit of the first reactor, or between the first reactor or zone and the second or any subsequent reactor or zone. Due to the difference in monomers, temperatures, pressures or other difference in polymerization conditions between at least two of the reactors or zones connected in series, polymer segments of differing composition such as comonomer content, crystallinity, density, tacticity, regio-regularity, or other chemical or physical difference, within the same molecule are formed in the different reactors or zones. The size of each segment or block is determined by continuous polymer reaction conditions, and preferably is a most probable distribution of polymer sizes.

When producing a block polymer having an ethylene block (EB) and a crystalline alpha-olefin block (CAOB) in two reactors or zones it is possible to produce the EB in the first reactor or zone and the CAOB in the second reactor or zone or to produce the CAOB in the first reactor or zone and the EB in the second reactor or zone. It may be more advantageous to produce EB in the first reactor or zone with fresh chain shuttling agent added. The presence of increased levels of ethylene in the reactor or zone producing EB may lead to much higher molecular weight in that reactor or zone than in the zone or reactor producing CAOB. The fresh chain shuttling agent will reduce the MW of polymer in the reactor or zone producing EB thus leading to better overall balance between the length of the EB and CAOB segments.

When operating reactors or zones in series it is necessary to maintain diverse reaction conditions such that one reactor produces EB and the other reactor produces CAOB. Carryover of ethylene from the first reactor to the second reactor (in series) or from the second reactor back to the first reactor through a solvent and monomer recycle system is preferably minimized. There are many possible unit operations to remove this ethylene, but because ethylene is more volatile than higher alpha olefins one simple way is to remove much of the unreacted ethylene through a flash step by reducing the pressure of the effluent of the reactor producing EB and flashing off the ethylene. An exemplary approach is to avoid additional unit operations and to utilize the much greater reactivity of ethylene versus higher alpha olefins such that the conversion of ethylene across the EB reactor approaches 100%. The overall conversion of monomers across the reactors can be controlled by maintaining the alpha olefin conversion at a high level (90 to 95%).

Exemplary catalysts and catalyst precursors for use to from the block composite include metal complexes such as disclosed in, e.g., International Publication Nos. WO 2005/090426 and WO 2011/016991 A2. Other exemplary catalysts are also disclosed in U.S. Patent Publication Nos. 2006/0199930, 2007/0167578, and 2008/0311812; U.S. Patent Nos. 7,355,089, 8,053,529, 8,686,087, and 8,716,400; and International Publication No. WO 2009/012215.

The Block Composite (BC1) is characterized as appropriate by Differential Scanning Calorimetry (DSC), C[13] Nuclear Magnetic Resonance (NMR), Gel Permeation Chromatography (GPC), Xylene Soluble Fractionation Analysis and high temperature liquid chromatography (HTLC) fractionation. These are described above and in U.S. Patent Publication Nos. 2011/0082257, US2011/0082258 and 2011/0082249, all published on April 7, 2011 and are incorporated herein by reference with respect to descriptions of the analysis methods.

The measured properties of BC1 are provided in Table 3, below.

**Table 3**

| Material | MFR (230°C/ 2.16 kg) | Density (g/cm$^3$) | Mw Kg/mol | Mw/ Mn | Total wt% C$_2$ (NMR) | Tm (°C) | Tc (°C) | Melt Enthalpy (J/g) | Modified Block Composite Index |
|---|---|---|---|---|---|---|---|---|---|
| BC1 | 6.5 | 0.864 | 101.2 | 2.66 | 45.9 | 121 | 52 | 25 | 0.570 |

*Modified Block Composite Index Calculations*

Typical Block Composite Index (BCI) is calculated based on Xylene Soluble Fractionation. These calculations are described in detail in U.S. Patent Nos. 8,716,400 and 8,802,774, in which soluble fraction provides an estimate of unbound ethylene polymer. However, for block composite compositions that have lower molecular weight of crystalline alpha-olefin polymer (CAOP, in this case, iPP), the iPP molecules tend to be more soluble in xylene soluble. In this particular case, the xylene soluble fraction may contain the lower molecular weight iPP, the diblocks with short segments of iPP and unbound ethylene polymer. For these block composites, MBCI provide an estimate of the quantity of block copolymer within the block composite under the assumption that the ratio of EB to CAOB within the diblock is the same as the ratio of ethylene to alpha-olefin in the overall block composite. This assumption is valid for these statistical olefin block copolymers based on the understanding of the individual catalyst kinetics and the polymerization mechanism for the formation of the diblocks via chain shuttling catalysis as described in the specification. This MBCI analysis shows that the amount of isolated PP is less than if the polymer was a simple blend of a propylene homopolymer (in this example the CAOP) and polyethylene (in this example the EP). Consequently, the polyethylene fraction contains an appreciable amount of propylene that would not otherwise be present if the polymer was simply a blend of polypropylene and polyethylene. To account for this "extra propylene", a mass balance calculation can be performed to estimate the MBCI from the amount of the polypropylene and polyethylene fractions and the weight % propylene present in each of the fractions that are separated by HTLC.

The corresponding MBCI calculation for BC1 is provided in Table 4, below.

**Table 4**

| Line # | Variable | Source | MBCI |
|---|---|---|---|
| 1 | Overall wt% C3 Total | Measured | 54.1 |
| 2 | wt% C3 in PP block/polymer | Measured | 97.2 |
| 3 | wt% C3 in PE block/polymer | Measured | 35.0 |
| 4 | wt fraction PP (in block or polymer) | Eq. 2 below | 0.300 |
| 5 | wt fraction PE (in block or polymer) | 1-Line 4 | 0.700 |
|  | Analysis of HTLC Separation |  |  |
| 6 | wt fraction isolated PP | Measured | 0.136 |
| 7 | wt fraction PE fraction | Measured | 0.864 |
| 8 | wt% C3 in PE-fraction | Eq. 4 below | 47.316 |
| 9 | wt fraction PP-diblock in PE fraction | Eq. 6 below | 0.198 |
| 10 | wt fraction PE in PE fraction | 1-Line 10 | 0.802 |
| 11 | wt fraction Diblock in PE fraction | 10/Line 4 | 0.660 |
|  |  |  |  |
| 12 | Modified Block Composite Index (MBCI) | Eq. 7 below | 0.570 |

Referring to Table 4 above, the MBCI is measured by first determining a summation of the weight % propylene from each component in the polymer according to Equation 1, below, which results in the overall weight % propylene/C3 (of the whole polymer). This mass balance equation can be used to quantify the amount of the PP and PE present in the block copolymer. This mass balance equation can also be used to quantify the amount of PP and PE in a binary blend or extended to a ternary, or n-component blend. For the BC1, the overall amount of PP or PE is contained within the blocks present in the block copolymer and the unbound PP and PE polymers.

$$\mathrm{Wt}\,\%\,C3_{Overall} = \mathrm{w}_{PP}\left(wt\%C3_{PP}\right) + \mathrm{w}_{PE}\left(wt\%C3_{PE}\right) \qquad \mathrm{Eq.\ 1}$$

where

$w_{pp}$ = weight fraction of PP in the polymer
$w_{PE}$ = weight fraction of PE in the polymer
$wt\%C3_{PP}$ = weight percent of propylene in PP component or block $wt\%C3_{PE}$ = weight percent of propylene in PE component or block

Note that the overall weight % of propylene (C3) is measured from $C^{13}$ NMR or some other composition measurement that represents the total amount of C3 present in the whole polymer. The weight % propylene in the PP block (wt%C3$_{PP}$) is set to 100 (if applicable) or if otherwise known from its DSC melting point, NMR measurement, or other composition estimate, that value can be put into its place. Similarly, the weight % propylene in the PE block (wt%C3$_{PE}$) is set to 100 (if applicable) or if otherwise known from its DSC melting point, NMR measurement, or other composition estimate, that value can be put into its place. The weight % of C3 is shown in Table 6.

Calculating the Ratio of PP to PE in the specified block composite: Based on Equation 1, the overall weight fraction of PP present in the polymer can be calculated using Equation 2 from the mass balance of the total C3 measured in the polymer. Alternatively, it could also be estimated from a mass balance of the monomer and comonomer consumption during the polymerization. Overall, this represents the amount of PP and PE present in the polymer regardless of whether it is present in the unbound components or in the block copolymer. For a conventional blend, the weight fraction of PP and weight fraction of PE corresponds to the individual amount of PP and PE polymer present. For the block composite, it is assumed that the ratio of the weight fraction of PP to PE also corresponds to the average block ratio between PP and PE present in this statistical block copolymer.

$$w_{PP} = \frac{wt\%C3_{Overall} - wt\%C3_{PE}}{wt\%C3_{PP} - wt\%C3_{PE}} \qquad \text{Eq. 2}$$

where

      $w_{PP}$ = weight fraction of PP present in the whole polymer
      wt%C3$_{PP}$ = weight percent of propylene in PP component or block
      wt%C3$_{PE}$ = weight percent of propylene in PE component or block

To estimate the amount of the block copolymer (diblock) in the Block Composite, apply Equations 3 through 5, and the amount of the isolated PP that is measured by HTLC analysis is used to determine the amount of polypropylene present in the diblock copolymer. The amount isolated or separated first in the HTLC analysis represents the 'unbound PP' and its composition is representative of the PP block present in the diblock copolymer. By substituting the overall weight % C3 of the whole polymer in the left hand side of Equation 3, and the weight fraction of PP (isolated from HTLC) and the weight fraction of PE (separated by HTLC) into the right hand side of Equation 3, the weight % of C3 in the PE fraction can be calculated using Equations 4 and 5. The PE fraction is described as the fraction separated from the unbound PP and contains the diblock and unbound PE. The composition of the isolated PP is assumed to be the same as the weight % propylene in the PP block as described previously.

$$wt\%C3_{Overall} = w_{PP\,isolated}(wt\%C3_{PP}) + w_{PE\text{-}fraction}(wt\%C3_{PE-fraction}) \qquad \text{Eq. 3}$$

$$wt\%C3_{PE-fraction} = \frac{wt\%C3_{Overall} - w_{PPisolated}(wt\%C3_{PP})}{w_{PE-fraction}} \qquad \text{Eq. 4}$$

$$w_{PE-fraction} = 1 - w_{PPisolated} \qquad \text{Eq. 5}$$

where

      $w_{PPisolated}$ = weight fraction of isolated PP from HTLC
      $w_{PE\text{-}fraction}$ = weight fraction of PE separated from HTLC, containing the diblock and unbound PE
      wt%C3$_{PP}$ = weight % of propylene in the PP; which is also the same amount of propylene present in the PP block and in the unbound PP
      wt%C3$_{PE\text{-}fraction}$ = weight % of propylene in the PE-fraction that was separated by HTLC
      wt%C3$_{Overall}$ = overall weight % propylene in the whole polymer

The amount of wt% C3 in the polyethylene fraction from HTLC represents the amount of propylene present in the block copolymer fraction that is above the amount present in the 'unbound polyethylene'. To account for the 'additional' propylene present in the polyethylene fraction, the only way to have PP present in this fraction is for the PP polymer chain to be connected to a PE polymer chain (or else it would have been isolated with the PP fraction separated by HTLC). Thus, the PP block remains adsorbed with the PE block until the PE fraction is separated.

The amount of PP present in the diblock is calculated using Equation 6.

$$w_{PP-diblock} = \frac{wt\%C3_{PE-fraction} - wt\%C3_{PE}}{wt\%C3_{PP} - wt\%C3_{PE}}$$

Eq. 6

Where

wt%C3$_{PE-fraction}$ = weight % of propylene in the PE-fraction that was separated by HTLC (Equation 4)
wt%C3$_{PP}$ = weight % of propylene in the PP component or block (defined previously)
wt%C3$_{PE}$ = weight % of propylene in the PE component or block (defined previously)
w$_{PP-diblock}$ = weight fraction of PP in the diblock separated with PE-fraction by HTLC

The amount of the diblock present in this PE fraction can be estimated by assuming that the ratio of the PP block to PE block is the same as the overall ratio of PP to PE present in the whole polymer. For example, if the overall ratio of PP to PE is 1:1 in the whole polymer, then it assumed that the ratio of PP to PE in the diblock is also 1:1. Thus, the weight fraction of diblock present in the PE fraction would be weight fraction of PP in the diblock (w$_{PP-diblock}$) multiplied by two. Another way to calculate this is by dividing the weight fraction of PP in the diblock (w$_{PP-diblock}$) by the weight fraction of PP in the whole polymer (Equation 2).

To further estimate the amount of diblock present in the whole polymer, the estimated amount of diblock in the PE fraction is multiplied by the weight fraction of the PE fraction measured from HTLC. To estimate the modified block composite index, the amount of diblock copolymer is determined by Equation 7.1 or 7.2, respectively. To estimate the MBCI, the weight fraction of diblock in the PE fraction calculated using Equation 6 is divided by the overall weight fraction of PP (as calculated in Equation 2) and then multiplied by the weight fraction of the PE fraction. The value of the MBCI can range from 0 to 1.0, wherein 1.0 would be equal to 100% diblock and zero would be for a material such as a traditional blend or random copolymer.

$$MBCI = \frac{w_{PP-diblock}}{w_{PP}} \cdot w_{PE-fraction}$$

Eq. 7

Where

w$_{PP-diblock}$ = weight fraction of PP in the diblock separated with the PE-fraction by HTLC (Equation 6)
w$_{PP}$ = weight fraction of PP in the polymer
w$_{PE-fraction}$ = weight fraction of PE separated from HTLC, containing the diblock and unbound PE (Equation 5)

For example, if an isotactic polypropylene block/ethylene-propylene block polymer (diblock polymer) contains a total of 53.3 wt% C3 and is made under the conditions to produce an iPP polymer containing 99 wt% C3 and an PE polymer with 10 wt% C3, the weight fractions of PP and PE are 0.487 to 0.514, respectively (as calculated using Equation 2).

Multilayer films having the compositions and layers as shown in Table 5 are prepared using the Alpine blown film line as described above:

**Table 5**

| Description | Layer A (Sealant) (12 microns) | Layer B (Core) (36 microns) | Layer B Shore Hardness D/ Crystallinity (%) | Layer C (12 microns) |
|---|---|---|---|---|
| Comparative Film A | LLDPE - 80% <br><br> LDPE - 20% | LLDPE - 80% <br><br> LDPE - 20% | 54/47.6 | LLDPE - 80% <br><br> LDPE - 20% |

(continued)

| Description | Layer A (Sealant) (12 microns) | Layer B (Core) (36 microns) | Layer B Shore Hardness D/ Crystallinity (%) | Layer C (12 microns) |
|---|---|---|---|---|
| Inventive Film 1 | LLDPE - 80% LDPE - 20% | LLDPE - 65% LDPE - 20% OBC - 15% | 48/42.2 | LLDPE - 80% LDPE - 20% |
| Inventive Film 2 | LLDPE - 80% LDPE - 20% | LLDPE - 50% LDPE - 20% OBC - 30% | 43/36.8 | LLDPE - 80% LDPE - 20% |
| Inventive Film 3 | LLDPE - 80% LDPE - 20% | LLDPE - 65% LDPE - 20% AFFINITY™ 8100 - 15% | 50/43.25 | LLDPE - 80% LDPE - 20% |
| Inventive Film 4 | LLDPE - 80% LDPE - 20% | LLDPE - 50% LDPE - 20% AFFINITY™ 8100 - 30% | 44/38.9 | LLDPE - 80% LDPE - 20% |
| Inventive Film 5 | LLDPE - 80% LDPE - 20% | LLDPE - 65% LDPE - 20% EPBP - 15% | 50/42.5 | LLDPE - 80% LDPE - 20% |
| Inventive Film 6 | LLDPE - 80% LDPE - 20% | LLDPE - 50% LDPE - 20% EPBP - 30% | 45/37.4 | LLDPE - 80% LDPE - 20% |
| Inventive Film 7 | LLDPE - 80% LDPE - 20% | LLDPE - 65% LDPE - 20% BC1 - 15% | 48/42.2 | LLDPE - 80% LDPE - 20% |
| Inventive Film 8 | LLDPE - 80% LDPE - 20% | LLDPE - 50% LDPE - 20% BC1 - 30% | 46/36.8 | LLDPE - 80% LDPE - 20% |
| Inventive Film 9 | LLDPE - 80% LDPE - 20% | BC1 - 100% | 21/11 | LLDPE - 80% LDPE - 20% |
| Comparative Film B | AFFINITY™ 1881 - 80% LDPE - 20% | LLDPE - 80% LDPE - 20% | 54/47.6 | LLDPE - 80% LDPE - 20% |
| Inventive Film 10 | AFFINITY™ 1881 - 80% LDPE - 20% | LLDPE - 65% LDPE - 20% OBC - 15% | 48/42.2 | LLDPE - 80% LDPE - 20% |
| Inventive Film 11 | AFFINITY™ 1881 - 80% LDPE - 20% | LLDPE - 50% LDPE - 20% OBC - 30% | 43/36.8 | LLDPE - 80% LDPE - 20% |
| Inventive Film 12 | AFFINITY™ 1881 - 80% LDPE - 20% | LLDPE - 65 % LDPE - 20% AFFINITY™ 8100 - 15% | 50/43.25 | LLDPE - 80% LDPE - 20% |

(continued)

| Description | Layer A (Sealant) (12 microns) | Layer B (Core) (36 microns) | Layer B Shore Hardness D/ Crystallinity (%) | Layer C (12 microns) |
|---|---|---|---|---|
| Inventive Film 13 | AFFINITY™ 1881 - 80% LDPE - 20% | LLDPE - 50% LDPE - 20% AFFINITY™ 8100 - 30% | 44/38.9 | LLDPE - 80% LDPE - 20% |
| Inventive Film 14 | AFFINITY™ 1881 - 80% LDPE - 20% | LLDPE - 65% LDPE - 20% EPBP - 15% | 50/42.5 | LLDPE - 80% LDPE - 20% |
| Inventive Film 15 | AFFINITY™ 1881 - 80% LDPE - 20% | LLDPE -50% LDPE - 20% EPBP - 30% | 45/37.4 | LLDPE - 80% LDPE - 20% |
| Inventive Film 16 | AFFINITY™ 1881 - 80% LDPE - 20% | LLDPE - 65% LDPE - 20% BC1 - 15% | 48/42.2 | LLDPE - 80% LDPE - 20% |
| Inventive Film 17 | AFFINITY™ 1881 - 80% LDPE - 20% | LLDPE - 50% LDPE - 20% BC1 - 30% | 46/36.8 | LLDPE - 80% LDPE - 20% |
| Inventive Film 18 | AFFINITY™ 1881 - 80% LDPE - 20% | BC1 - 100% | 21/11 | LLDPE - 80% LDPE - 20% |

The Shore Hardness D and crystallinity values of Layer B (core layer) of the multilayer films are measured (as described above) and reported in Table 5.

The films outlined in Table 5 are corona treated on the outside layer (Layer C) to a level of 42 dynes (according to ASTM D2578-09) during fabrication. The corona treated films are then laminated to a 20 micron oriented polypropylene film using a solvent free adhesive, MOR-FREE™ LPlus (commercially available from The Dow Chemical Company) on a Nordemeccanica Accoppiatrice Model 400 laminator.

The resulting laminates are slit to a width of 320mm for pouch manufacturing.

Pouches are manufactured on a Bosch SVE 2520WR continuous VFFS packaging line as follows. An initial temperature is set for the seal bar temperatures of the packaging machine at 120° C. At this temperature, the dwell time, in milliseconds (ms), is adjusted (raised) until a sealed package having dimensions of 240 mm (length) x 152 mm (width) is obtained.

10 empty packages are made for each laminate sample and are subjected to hermeticity testing using a Pack-Vac Leak Detector PVCA 201413. The Pack-Vac Leak detector allows the user to perform a vacuum test in less than 30 seconds. The unit is partly filled with water (deionized) for the test. Sealed packages are placed into the water, the lid is closed, and the vacuum device is engaged to apply a pressure of 600mbar. If bubbles emerge from a package, it fails the test. A package pass is recorded when no bubbles are observed. All 10 samples for a particular laminate have to pass to achieve a 100% hermeticity rating.

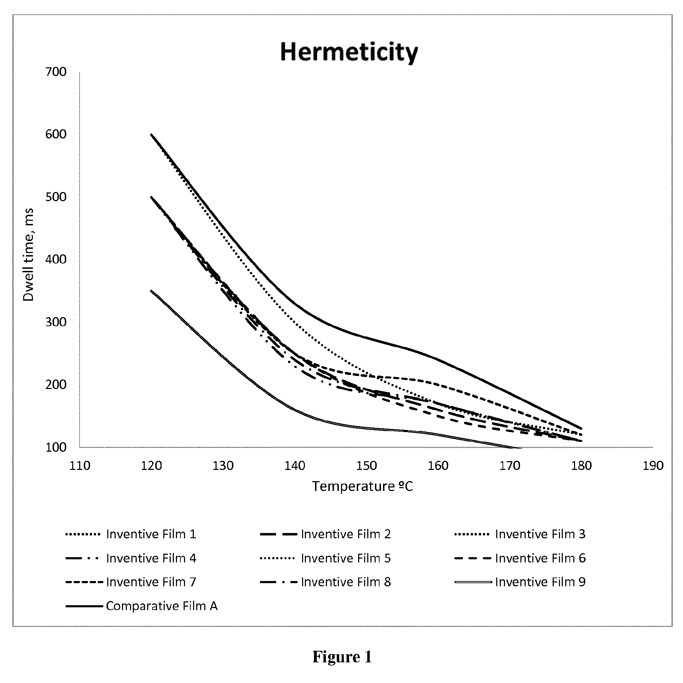

If leaks are detected, the dwell time on the packaging machine is increased by 10ms, 10 more samples are produced, and the leak detection test is conducted again. This process is repeated until 100% hermeticity is achieved at a particular temperature. The process is then repeated for subsequent seal bar temperatures, usually increasing in 10° C increments. The data obtained are plotted on a curve showing dwell time versus temperature. Table 6 and Figure 1 show the results for Inventive Films 1-9 and Comparative Film A:

**Table 6**

| Seal Temp. (°C) | Dwell time (ms) | | | | | | | | | |
|---|---|---|---|---|---|---|---|---|---|---|
| | Comp. Film A | Inv. Film 1 | Inv. Film 2 | Inv. Film 3 | Inv. Film 4 | Inv. Film 5 | Inv. Film 6 | Inv. Film 7 | Inv. Film 8 | Inv. Film 9 |
| 120 | 600 | 600 | 500 | 600 | 500 | 600 | 500 | 500 | 500 | 350 |
| 140 | 330 | 300 | 250 | 300 | 230 | 300 | 250 | 250 | 240 | 160 |
| 160 | 240 | 170 | 160 | 170 | 170 | 170 | 150 | 200 | 170 | 120 |
| 180 | 130 | 120 | 110 | 120 | 110 | 120 | 110 | 120 | 110 | 80 |

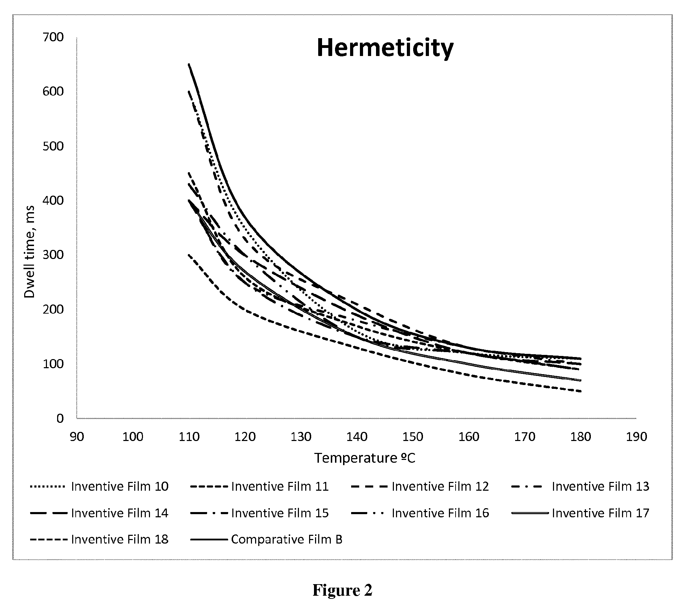

Table 7 and Figure 2 show the results for Inventive Films 10-18 and Comparative Film B:

**Table 7**

| Seal Temp. (°C) | Dwell time (ms) | | | | | | | | | |
|---|---|---|---|---|---|---|---|---|---|---|
| | Comp. Film B | Inv. Film 10 | Inv. Film 11 | Inv. Film 12 | Inv. Film 13 | Inv. Film 14 | Inv. Film 15 | Inv. Film 16 | Inv. Film 17 | Inv. Film 18 |
| 110 | 650 | 600 | 450 | 600 | 400 | 400 | 400 | 430 | 400 | 300 |
| 120 | 370 | 350 | 260 | 330 | 250 | 300 | 250 | 300 | 270 | 200 |
| 140 | 200 | 160 | 170 | 210 | 180 | 190 | 150 | 150 | 150 | 130 |
| 160 | 130 | 120 | 120 | 130 | 130 | 120 | 120 | 120 | 100 | 80 |
| 180 | 110 | 110 | 90 | 110 | 100 | 100 | 90 | 90 | 70 | 50 |

In general, packages formed at lower dwell times and/or temperatures, while maintaining 100% hermeticity, are preferred as they can be formed with less energy use and at faster packaging speeds resulting in lower costs and improved efficiencies. Accordingly, the above data demonstrate that when the Shore Hardness D and crystallinity of a core layer (Layer B) adjacent to a sealant layer (Layer A) is reduced, the laminate performance on a packaging line is improved, independent of the particular sealant layer. Further, the use such of layers adjacent to a sealant layer can advantageously improve the performance of laminates on VFFS equipment while minimizing blocking or slip issues that are sometimes observed when certain sealant layer compositions are used.

**Claims**

1. A multilayer film comprising:

   Layer A which is a sealant layer;
   Layer B having a top facial surface and a bottom facial surface and having a Shore Hardness D of 50 or less and a crystallinity of 44% or less; and
   Layer C having a top facial surface and a bottom facial surface and comprising polyethylene,
   wherein the top facial surface of Layer B is in adhering contact with the bottom facial surface of Layer A and wherein the top facial surface of Layer C is in adhering contact with the bottom facial surface of Layer B.

2. The multilayer film of claim 1, wherein Layer B comprises at least 15 weight percent of a polyolefin based on the total weight of Layer B, wherein the polyolefin has a Shore Hardness D of less than 35 and a crystallinity of 20% or less.

3. The multilayer film of claim 1 or claim 2, wherein Layer B is not a tie layer.

4. The multilayer film of any of the preceding claims, wherein Layer A is an outer layer of the multilayer film.

5. The multilayer film of any of the preceding claims, wherein Layer A is formed from one or more ethylene-based polymers.

6. The multilayer film of any of the preceding claims, wherein Layer A has a Shore Hardness D of 50 or more and a crystallinity of 47% or more.

7. The multilayer film of any claims 1-5, wherein Layer A has a Shore Hardness D of more than 45 and a crystallinity of 39% or more.

8. The multilayer film of any of the preceding claims, wherein Layer B has a thickness of at least 10 microns.

9. The multilayer film of any of the preceding claims, wherein Layer C has a Shore Hardness D of 50 or more and a crystallinity of 47% or more.

10. The multilayer film of any of the preceding claims, wherein the film comprises at least 5 layers.

11. The multilayer film of any of the preceding claims, wherein the film comprises 7 layers.

12. The multilayer film of any of claims 1-10, further comprising Layer D and Layer E, wherein a top facial surface of Layer D is in adhering contact with the bottom facial surface of Layer C, wherein a top facial surface of Layer E is in adhering contact with a bottom facial surface of Layer D.

13. A laminate comprising:

   a first film comprising polyethylene terephthalate, polypropylene, polyamide, or polyethylene; and
   a multilayer film according to any of the preceding claims,
   wherein the first film is laminated to the multilayer film.

14. A package formed from any of the multilayer films disclosed herein.

15. A package comprising:

   a nonwoven layer; and
   a multilayer film according to any of claims 1-12;
   wherein the nonwoven layer forms an outer layer of the package.

**Figure 1**

**Figure 2**

Europäisches
Patentamt

European
Patent Office

Office européen
des brevets

## EUROPEAN SEARCH REPORT

Application Number

EP 16 38 2417

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 025 856 A1 (DOW GLOBAL TECHNOLOGIES LLC [US]) 1 June 2016 (2016-06-01) * paragraphs [0020], [0023] - [0027]; claim 1; figure 1 * ----- | 1-15 | INV. B32B27/08 B32B27/32 B32B27/34 B32B27/36 B32B27/12 B32B5/02 |
| X | US 2015/158235 A1 (VAN LOON ACHIEL J [BE] ET AL) 11 June 2015 (2015-06-11) * paragraphs [0053], [0056], [0082], [0083], [0087]; claim 1 * ----- | 1-11, 13-15 | |
| A | US 5 928 744 A (HEILMANN KLAUS [DE] ET AL) 27 July 1999 (1999-07-27) * column 6, line 62 - column 7, line 18 * * column 7, line 64 - column 8, line 16 * * claim 1 * ----- | 1-14 | |
| A | WO 2015/157876 A1 (EXXONMOBIL ASIA PACIFIC RES & DEV CO LTD [CN]) 22 October 2015 (2015-10-22) * the whole document * ----- | 1-15 | |

TECHNICAL FIELDS SEARCHED (IPC)

B32B
C08L

The present search report has been drawn up for all claims

| Place of search | Date of completion of the search | Examiner |
|---|---|---|
| The Hague | 21 February 2017 | Songy, Odile |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 38 2417

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2017

| Patent document cited in search report | | Publication date | Patent family member(s) | | Publication date |
|---|---|---|---|---|---|
| EP 3025856 | A1 | 01-06-2016 | NONE | | |
| US 2015158235 | A1 | 11-06-2015 | US 2015158235 | A1 | 11-06-2015 |
| | | | WO 2015085446 | A1 | 18-06-2015 |
| US 5928744 | A | 27-07-1999 | AT 237374 | T | 15-05-2003 |
| | | | AU 699497 | B2 | 03-12-1998 |
| | | | BR 9603732 | A | 26-05-1998 |
| | | | CA 2184868 | A1 | 17-03-1997 |
| | | | DE 19534455 | C1 | 12-12-1996 |
| | | | EP 0765740 | A2 | 02-04-1997 |
| | | | ES 2200028 | T3 | 01-03-2004 |
| | | | JP 4179644 | B2 | 12-11-2008 |
| | | | JP H09123314 | A | 13-05-1997 |
| | | | US 5928744 | A | 27-07-1999 |
| WO 2015157876 | A1 | 22-10-2015 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4599392 A
- US 5272236 A
- US 5278272 A
- US 5582923 A
- US 5733155 A
- US 3645992 A
- US 4076698 A
- US 3914342 A
- US 5854045 A
- US 8716400 B
- US 8053529 B
- US 8686087 B
- US 7951882 B
- WO 2011016991 A2
- EP 1745171 A
- US 20140248811 A
- WO 2005090426 A
- US 20060199930 A
- US 20070167578 A
- US 20080311812 A
- US 7355089 B
- WO 2009012215 A
- US 20110082257 A
- US 20110082258 A
- US 20110082249 A
- US 8802774 B

**Non-patent literature cited in the description**

- **WILLIAMS ; WARD.** *Journal of Polymer Science, Polymer Letters,* 1968, vol. 6 (621
- **WILLIAMS ; WARD.** *J. Polym. Sc., Polym. Let.,* 1968, vol. 6, 621